# EUROPEAN PATENT APPLICATION

(11) **EP 4 152 467 A1**
(43) Date of publication of application: **22.03.2023**
(21) Application number: 22804865.8
(22) Date of filing: 02.05.2022
(51) Int. Cl.: H01M 10/0569, H01M 10/0568, H01M 4/60, H01M 4/62, H01M 4/38, H01M 4/36, H01M 10/052

(54) **LITHIUM-SULFUR BATTERY HAVING IMPROVED CYCLE LIFE PERFORMANCE**

(30) Priority: 20.05.2021 KR 20210065034; 20.04.2022 KR 20220048548
(71) Applicant: LG Energy Solution, Ltd., Seoul 07335 (KR)
(72) Inventor: HAN, Suenghoon, Daejeon 34122 (KR); LEE, Jaegil, Daejeon 34122 (KR)
(74) Representative: Goddar, Heinz J.
(86) International application number: PCT/KR2022/006228
(87) International publication number: WO 2022/245010

(57) **Abstract**

Disclosed is a lithium-sulfur battery capable of improving cycle lifetime performance, by using together with a positive electrode containing a sulfur-modified polyacrylonitrile (S-PAN)-based compound as an active material and a specific electrolyte showing a synergistic effect with it, so that the problems of dendrite formation and electrolyte decomposition and depletion, which occur when lithium metal is used as a negative electrode, are prevented. The lithium-sulfur battery comprises a positive electrode comprising at least one sulfur-modified polyacrylonitrile-based compound as an active material; lithium metal negative electrode; and an electrolyte containing a first solvent containing a heterocyclic compound containing one or more double bonds and at the same time containing any one of an oxygen atom and a sulfur atom, a second solvent containing diglyme and lithium salt.

## Description

### [Technical Field]

The present application claims the benefits of priorities based on Korean Patent Application No. 10-2021-0065034 filed on May 20, 2021 and Korean Patent Application No. 10-2022-0048548 filed on April 20, 2022, the entire contents of which are incorporated herein by reference.

The present invention relates to a lithium-sulfur battery with improved cycle lifetime performance, and more particularly a lithium-sulfur battery, which can improve cycle lifetime performance, by using a positive electrode containing a sulfur-modified polyacrylonitrile (S-PAN)-based compound as an active material and a specific electrolyte showing a synergistic effect with it, so that the problems of dendrite formation and electrolyte decomposition and depletion, which occurs when lithium metal is used as a negative electrode, are prevented.

### [Background Art]

As interest in energy storage technology continues to increase, since its application field is expanding from energy for mobile phones, tablets, laptops and camcorders to even energy for electric vehicles (EVs) and hybrid electric vehicles (HEVs), research and development of electrochemical devices are gradually increasing. The field of electrochemical devices is an area that is receiving the most attention in this respect. Among them, the development of secondary batteries such as a lithium-sulfur secondary battery capable of being charged/discharged has become a focus of attention. In recent years, in developing these batteries, in order to improve capacity density and specific energy, it has led to research and development in designs for new electrodes and batteries.

Among these electrochemical devices, a lithium-sulfur battery (Li-S battery) has about 7 times higher energy density (theoretical capacity) than a lithium-ion battery and thus is in the spotlight as a next-generation secondary battery that can replace a lithium-ion battery. In such a lithium-sulfur battery, a reduction reaction of sulfur and an oxidation reaction of lithium metal occur during discharge. At this time, sulfur forms lithium polysulfide (LiPS) having a linear structure from Ss having a ring structure. This lithium-sulfur battery is characterized by showing a stepwise discharging voltage until the polysulfide is completely reduced to Li₂S.

However, the biggest obstacle of the lithium-sulfur secondary battery in the commercialization is the leaching and shuttle phenomenon of the lithium polysulfide, which occurs during charging/discharging in a battery using a sulfur-based compound as a positive electrode active material and an alkali metal such as lithium as a negative electrode active material. Due to this phenomenon, lithium polysulfide is transferred to the negative electrode and the capacity of the lithium-sulfur battery is reduced, and thus, the lithium-sulfur battery has a major problem that the lifetime is reduced and the reactivity is reduced. That is, since polysulfide leached from the positive electrode has high solubility in the organic electrolyte solution, undesired polysulfide migration (PS shuttling) to the negative electrode through the electrolyte solution may occur. As a result, a decrease in capacity due to irreversible loss of the positive electrode active material and a decrease in the lifetime of the battery by deposition of sulfur particles on the surface of the lithium metal due to side reactions are occurred.

In addition, during charging/discharging of the battery, the high reactivity and uneven electrodeposition of lithium, which is the negative electrode, causes overheating, decomposition of electrolyte solution and depletion of lithium, and the non-uniform electrodeposition of lithium ions during the charging process causes so-called dendrite growth that damages the separator, which causes a lot of heat and sparks, causing serious safety problems such as ignition of the electrolyte solution, a flammable organic material.

On the other hand, if S-PAN, which is a composite of sulfur and polyacrylonitrile, is used as a positive electrode active material, since the sulfur contained in S-PAN reacts with lithium and is not leached into the electrolyte in the form of lithium polysulfide and lithium polysulfide is transferred to the lithium negative electrode and thus does not cause a shuttle reaction, there is an advantage that there is no need to use an electrolyte additive for shuttle inhibition such as LiNO₃. In addition, it can participate in the reaction at low porosity compared to the case of using only sulfur-carbon composite as a positive electrode active material, and in this case, there is an advantage that the same performance can be expressed even if an electrolyte is used in a small amount.

For this reason, in the industry, although S-PAN is being considered as a material to replace or to be used together with sulfur-carbon composite, and also it is being applied in practice, there is a problem that the aforementioned problems (dendrite growth, electrolyte decomposition, etc.) occur in the same way, and the phenomenon of lithium polysulfide leaching and shuttle also still occurs.

On the other hand, in order to improve the capacity of the lithium-sulfur battery, there is also research on introducing a sulfolane-based solvent to the electrolyte, but in this case, there is a problem that sulfolane generates gas during the charging/discharging process of the battery, and as a result, the capacity and lifetime characteristics of the battery are adversely affected. That is, sulfolane is a solvent capable of dissolving a lot of lithium salt, and combines with lithium salt to generate gas in the form of a free-solvent that does not form a complex. In other words, if sulfolane of Free-Solvent binds to the surface of lithium metal, which is the negative electrode of lithium-sulfur battery, and interferes with the formation of the SEI layer, the side reaction between lithium metal and electrolyte or lithium polysulfide is accelerated, which leads to deterioration in the performance of the battery.

Therefore, there is a need to develop a lithium-sulfur battery that can solve the above-mentioned problems (leaching and shuttle of lithium polysulfide, growth of dendrite, decomposition of electrolyte, promotion of side reactions, etc.), while including a composite (S-PAN) of sulfur and polyacrylonitrile having the same advantages as above as a positive electrode active material.

### [Disclosure]

### [Technical Problem]

Therefore, it is an object of the present invention to provide a lithium-sulfur battery capable of improving cycle lifetime performance, by using together with a positive electrode containing a sulfur-modified polyacrylonitrile (S-PAN)-based compound as an active material and a specific electrolyte showing a synergistic effect with it.

### [Technical Solution]

In order to achieve the above object, the present invention provides a lithium-sulfur battery which comprises a positive electrode comprising at least one sulfur-modified polyacrylonitrile-based compound as an active material; a lithium metal negative electrode; and an electrolyte containing a first solvent comprising a heterocyclic compound containing one or more double bonds and at the same time, containing any one of an oxygen atom and a sulfur atom, a second solvent containing diglyme, and lithium salt.

### [Advantageous Effects]

According to the lithium-sulfur battery with improved cycle lifetime performance according to the present invention, it has the advantage of improving cycle lifetime performance by using together with a positive electrode containing a sulfur-modified polyacrylonitrile (S-PAN)-based compound as an active material and a specific electrolyte showing a synergistic effect with it.

### [Description of Drawings]

FIG. 1 is a graph comparing and contrasting the lifetime characteristics and capacity of the lithium-sulfur batteries manufactured according to an Example of the present invention and Comparative Example.
FIG. 2 is a graph comparing and contrasting lifetime characteristics and capacity of the lithium-sulfur batteries manufactured according to an Example of the present invention.
FIG. 3 is a graph comparing and contrasting the lifetime characteristics and capacity of the lithium-sulfur batteries manufactured according to an Example of the present invention and Comparative Example.
FIG. 4 is a graph comparing and contrasting the lifetime characteristics and capacity of the lithium-sulfur batteries manufactured according to an Example of the present invention and Comparative Example.

### [Best Mode]

Hereinafter, the present invention will be described in detail with reference to the drawings.

The lithium-sulfur battery according to the present invention comprises a positive electrode comprising at least one sulfur-modified polyacrylonitrile-based compound as an active material; a lithium metal negative electrode; and an electrolyte containing a first solvent comprising a heterocyclic compound containing one or more double bonds and at the same time, containing any one of an oxygen atom and a sulfur atom, a second solvent containing diglyme, and lithium salt.

If S-PAN, which is a composite of sulfur and polyacrylonitrile, is used as a positive electrode active material, since the sulfur contained in S-PAN reacts with lithium and is not leached into the electrolyte in the form of lithium polysulfide and lithium polysulfide is transferred to the lithium negative electrode and thus does not cause a shuttle reaction, there is an advantage that there is no need to use an electrolyte additive for shuttle inhibition such as LiNO₃. In addition, it can participate in the reaction at low porosity compared to the case of using only sulfur-carbon composite as a positive electrode active material, and in this case, there is an advantage that the same performance can be expressed even if an electrolyte is used in a small amount.

For this reason, in the industry, although S-PAN is being considered as a material to replace or to be used together with sulfur-carbon composite, and also it is being applied in practice, the phenomenon of lithium polysulfide leaching and shuttle also still occurs, and thus there is a major problem that the lithium polysulfide is transferred to the negative electrode and the capacity of the lithium-sulfur battery is reduced, and thus the lifetime of the lithium-sulfur battery is reduced and the reactivity is reduced. That is, polysulfide leached from the positive electrode has high solubility in the organic electrolyte solution, so unwanted movement (polysulfide shuttling) may occur through the electrolyte solution toward the negative electrode, and as a result, a reduction in the lifetime of the battery will occur due to the decrease in capacity by irreversible loss of the positive electrode active material and the deposition of sulfur particles on the surface of lithium metal by side reaction.

In addition, during charging/discharging of the battery, the high reactivity and uneven electrodeposition of lithium, which is the negative electrode, causes overheating, decomposition of electrolyte solution and depletion of lithium, and the non-uniform electrodeposition of lithium ions during the charging process causes so-called dendrite growth that damages the separator, which causes a lot of heat and sparks, causing serious safety problems such as ignition of the electrolyte solution which is a flammable organic material.

Accordingly, the applicant of the present invention has developed a lithium-sulfur battery capable of improving cycle lifetime performance by incorporating a composite (S-PAN) of sulfur and polyacrylonitrile having the same advantages as above as a positive electrode active material and combining a specific electrolyte showing a synergistic effect with it.

### Positive electrode

The positive electrode comprising at least one sulfur-modified polyacrylonitrile-based compound as an active material comprises a current collector and a positive electrode active material layer formed on at least one surface of the current collector. The positive electrode active material layer comprises a sulfur-modified polyacrylonitrile (sulfurized polyacrylonitrile, S-PAN)-based compound as a positive electrode active material, and further comprises a porous metal oxide additive, if necessary.

The sulfur-modified polyacrylonitrile (sulfurized polyacrylonitrile, S-PAN)-based compound may be at least one selected from the group consisting of compounds represented by Formulas 1 to 5 below. However, it should be noted that, in addition to the compounds represented by Formulas 1 to 5 below, various types of sulfur-modified polyacrylonitrile may be applicable. On the other hand, it should be noted that there is no limitation on the number of repeating units ("[]") of Formulas 1, 3, and 4 below.

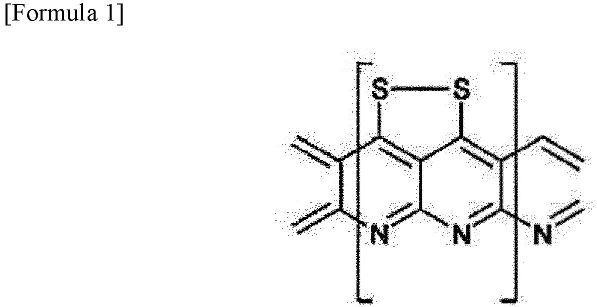

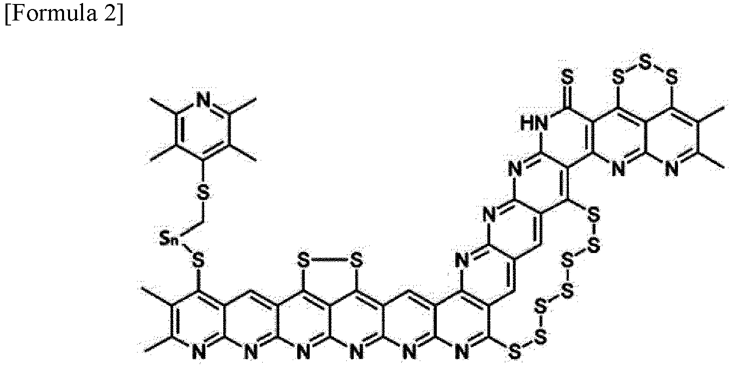

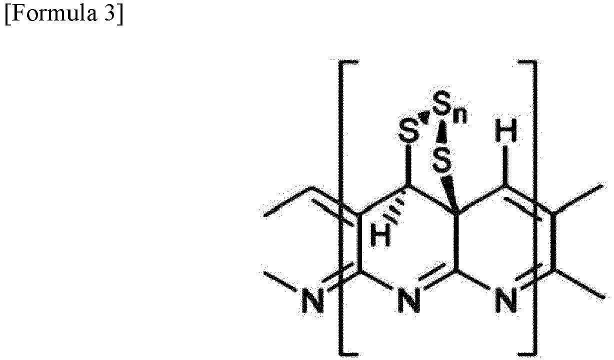

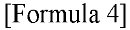

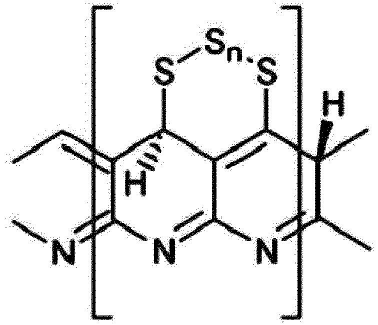

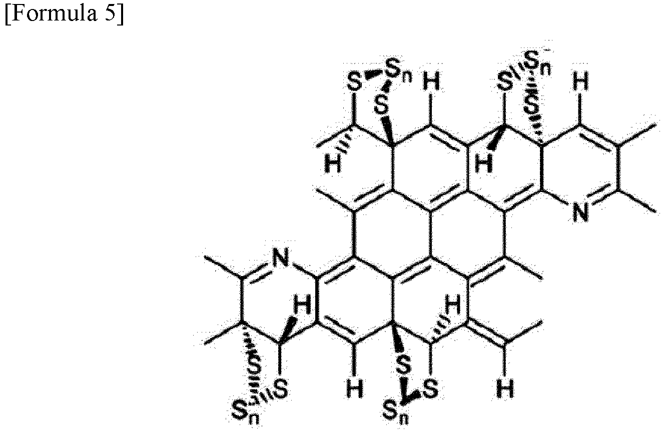

In Formulas 2 to 5, n is an integer of 1 to 4.

The sulfur-modified polyacrylonitrile-based compound may be obtained, for example, by heating sulfur (powder) and polyacrylonitrile (powder) in a closed, non-oxidizing atmosphere. By this process, sulfur in a vapor state reacts with polyacrylonitrile at the same time as the ring closure reaction of polyacrylonitrile, and polyacrylonitrile modified by sulfur can be obtained. The sealed atmosphere refers to an atmosphere in which the airtight state is maintained to a degree that prevents the outflow of sulfur and does not lose the sulfur vapor generated by heating. In addition, the non-oxidizing atmosphere refers to an atmosphere in a reduced pressure state with a low oxygen concentration such that the oxidation reaction does not proceed, a sulfur gas atmosphere, or an inert gas atmosphere such as nitrogen or argon. A specific method for heating the raw material powder in a closed, non-oxidizing atmosphere is not particularly limited, but for example, the raw material powder can be put in a container whose airtightness is maintained to such a degree that sulfur vapor is not lost, and the inside of the container can be heated in a reduced pressure state or in an inert gas atmosphere.

Alternatively, a mixture of sulfur powder and polyacrylonitrile powder may be heated in a vacuum-packed state with a packaging material composed of a material that does not react with sulfur vapor, such as an aluminum laminate film. In this case, it is preferable to heat the raw material powder vacuum-packed by the packaging material in a pressure-resistant container such as an autoclave sealed with water, for example, in order not to damage the packaging material by the generated sulfur vapor. According to this method, since the packaging material is pressurized from the outside by the generated water vapor, it is possible to prevent the packaging material from being swollen and damaged by the sulfur vapor.

On the other hand, when heating the raw material powder composed of sulfur powder and polyacrylonitrile powder, even though only the mixture of both powders may be heated, for example, it is also possible to mold the mixture into the form of pellets, and then heat the resulting molded body. The heating temperature may be 250 to 500 °C, preferably 250 to 400 °C. If the heating temperature is less than 250 °C, the reaction between sulfur and polyacrylonitrile may not occur. If the heating temperature exceeds 500 °C, there is a risk that the content of sulfur in the sulfur-modified polyacrylonitrile is lowered due to the desorption of sulfur, and the capacity of the battery may be lowered. On the other hand, the sulfur-modified polyacrylonitrile prepared through the above-mentioned heating temperature is not decomposed. In addition, the heating time is not particularly limited, and may be different depending on the heating temperature. For example, the heating time within the above-mentioned temperature range may be 10 minutes to 10 hours, preferably 30 minutes to 6 hours. According to the above method, the ring closure reaction of polyacrylonitrile and the reaction of sulfur and polyacrylonitrile occur simultaneously, and polyacrylonitrile modified with sulfur can be obtained.

It may be preferable that the sulfur has a powdery state, and in this case, the particle diameter of the sulfur powder may be 40 to 150 µm, preferably 40 to 100 µm. If the particle diameter of the sulfur powder satisfies the above range, since the reactivity of the raw material powder is increased, the synthesis reaction time of the sulfur-modified polyacrylonitrile-based compound can be shortened, and a uniform sulfur-modified polyacrylonitrile-based compound can be obtained. On the other hand, when the particle diameter of the sulfur powder is out of the above range, there is a fear that the workability is reduced.

The polyacrylonitrile, as a powder, may have a weight average molecular weight (MW) of 10,000 to 3,000,000, preferably 1,000,000 to 2,000,000. In addition, the particle diameter of the polyacrylonitrile powder may be 0.5 to 50 µm, preferably 1 to 10 µm. If the particle diameter of the polyacrylonitrile powder satisfies the above range, since the reactivity of the raw material powder is increased, a sulfur-modified polyacrylonitrile-based compound with high uniformity can be obtained more quickly. On the other hand, if the particle diameter of the polyacrylonitrile powder is less than 0.5 µm, workability may be reduced. If the particle diameter of the polyacrylonitrile powder exceeds 50 µm, the reactivity of the battery may be reduced.

On the other hand, there is no particular limitation on the mixing ratio of the sulfur powder and the polyacrylonitrile powder, but the mixing ratio may be 50 to 1,000 parts by weight, preferably 50 to 500 parts by weight, more preferably 50 to 350 parts by weight of the sulfur powder, based on 100 parts by weight of the polyacrylonitrile powder. If the mixing ratio of the sulfur powder and the polyacrylonitrile powder satisfies the above range, since the molten sulfur easily penetrates into the polyacrylonitrile powder, a uniform sulfur-modified polyacrylonitrile-based compound can be obtained.

In one embodiment of the present invention, the sulfur-modified polyacrylonitrile-based compound comprises carbon, nitrogen and sulfur. In addition, the sulfur-modified polyacrylonitrile-based compound may comprise a small amount of oxygen and hydrogen. For example, the sulfur-modified polyacrylonitrile-based compound may be composed of 40 to 60% by weight of carbon, 15 to 45% by weight of sulfur, 10 to 25% by weight of nitrogen, and 1 to 5% by weight of hydrogen. In addition, in the case of the sulfur-modified polyacrylonitrile-based compound, it is preferable that in X-ray diffraction according to CuKα ray, the peak of sulfur disappears and only the peak with a diffraction angle (2θ) broad in the vicinity of 20 to 30° is confirmed. That is, in the case of a sulfur-modified polyacrylonitrile-based compound, it is preferable that sulfur does not exist as an aggregate, and exists in a state in combination with polyacrylonitrile that has undergone a ring closure reaction. In the case of the sulfur-modified polyacrylonitrile-based compound, it is preferable that the main peak exists in the vicinity of 1,330 cm⁻¹ of the Raman shift in the Raman spectrum and peaks exists in the vicinity of 1,561 cm⁻¹, 1,512 cm⁻¹, 1,447 cm⁻¹, 1,150 cm⁻¹, 996 cm⁻¹, 942 cm⁻¹, 802 cm⁻¹, 474 cm⁻¹, 391 cm⁻¹, 365 cm⁻¹, and 305 cm⁻¹ in the range of 200 cm⁻¹ to 2,000 cm⁻¹.

On the other hand, as described above, the positive electrode active material containing the sulfur-modified polyacrylonitrile-based compound, if necessary, may further comprise a porous metal oxide additive. The porous metal oxide additive is derived from metal-organic frameworks (MOFs), and specifically, may be a porous metal oxide derived from Prussian blue analogues (PBAs). Here, the Prussian blue analogue has a structure in which organic and inorganic subunits are chemically strongly bonded. Here, the organic subunit is an organic ligand in which carbon and nitrogen are triple bonded, is combined with an inorganic subunit containing a metal, and forms a three-dimensional structure, and due to this structure, the Prussian blue analogue has structurally porous properties. The Prussian blue analogue may have a specific surface area of 500 to 1,500 m²/g, preferably 700 to 900 m²/g.

In a specific embodiment of the present invention, the porous metal oxide additive may be one or more of compounds represented by Formula 6 below:

[Formula 6] M_{1.8}Co_{1.2}O₄

In Formula 6, M may be at least one selected from the group consisting of Zn, Co, Cu, Fe, Ni, and Mn. In a specific embodiment of the present invention, the porous metal oxide additive is a Prussian blue analog heat-treated at a high temperature, wherein the C-N bond is oxidized by the heat treatment, CO₂ and NₓY_{y} are generated and removed. Accordingly, the porous metal oxide additive may have a higher porosity than the Prussian blue analogue. In addition, the pores present in the porous metal oxide additive are interconnect pores connected to each other. Due to these porous characteristics, the movement of the organic electrolyte solution containing lithium ions is facilitated, and the electrochemical reaction is promoted. In the present invention, the heat treatment temperature of the Prussian blue analog may be 400 to 600 °C. If the heat treatment temperature satisfies the above range, the gas generation rate is increased to improve the porosity. However, if the heat treatment temperature exceeds 600 °C, the size of the pores may become excessively large, which may cause a problem in that the energy density per weight of the electrode is lowered. Therefore, considering the smooth entry and exit of the electrolyte solution and the energy density of the electrode, it may be preferable to set the heat treatment temperature to satisfy the heat treatment temperature described above.

In addition, in one specific embodiment of the present invention, the porosity of the metal oxide additive may be 20 to 60%, preferably 20 to 50%. In addition, in the porous metal oxide additive, the size of the pores may be 4 to 40 nm, preferably 10 to 40 nm, more preferably 20 to 40 nm based on the longest diameter of the pores. In the present invention, the measurement of the porosity distribution is not limited to a particular method, and, for example, may be measured by a Barrett-Joyner-Halenda (BJH) method. In addition, in the present invention, the content of the additive may be 1 to 10% by weight compared to 100% by weight of the positive electrode active material layer, and if this range is satisfied, there is an advantage that the high-capacity characteristic of the positive electrode is improved and the problem of occurrence of cracks in the electrode is reduced.

On the other hand, the positive electrode active material of the present invention may further comprise a sulfur-carbon composite (C₂Sₓ)ₙ: x=2.5 ~ 50, n≥2) as needed. The carbon material (or carbon source) constituting the sulfur-carbon composite may have a porous structure or a high specific surface area, and may be any as long as it is commonly used in the art. For example, the porous carbon material may be, but is not limited to, at least one selected from the group consisting of graphite; graphene; carbon blacks such as Denka black, acetylene black, Ketjen black, channel black, furnace black, lamp black, and thermal black; carbon nanotubes (CNTs) such as single wall carbon nanotube (SWCNT), and multiwall carbon nanotubes (MWCNT); carbon fibers such as graphite nanofiber (GNF), carbon nanofiber (CNF), and activated carbon fiber (ACF); and activated carbon, and its shape may be spherical, rod-shaped, needle-shaped, plate-shaped, tubular or bulk-shaped, and it can be used without limitation as long as it is commonly used in a lithium secondary battery. In addition, pores are formed in the carbon material, and the porosity of the pores is 40 to 90%, preferably 60 to 80%. In addition, the pore size of the carbon material is 10 nm to 5 µm, preferably 50 nm to 5 µm.

The positive electrode comprised in the lithium-sulfur battery of the present invention further includes a binder and an electrically conductive material in addition to the positive electrode active material described above. The binder is a component that assists in the bonding between a positive electrode active material and an electrically conductive material and the bonding to a current collector, and for example, may be, but is not limited to, at least one selected from the group consisting of polyvinylidenefluoride (PVdF), polyvinylidenefluoride-polyhexafluoropropylene copolymer (PVdF/HFP), polyvinylacetate, polyvinylalcohol, polyvinylether, polyethylene, polyethyleneoxide, alkylated polyethyleneoxide, polypropylene, polymethyl(meth)acrylate, polyethyl(meth)acrylate, polytetrafluoroethylene (PTFE), polyvinylchloride, polyacrylonitrile, polyvinylpyridine, polyvinylpyrrolidone, styrene-butadiene rubber, acrylonitrile-butadiene rubber, ethylene-propylene-diene monomer (EPDM) rubber, sulfonated EPDM rubber, styrene-butylene rubber, fluorine rubber, carboxymethylcellulose (CMC), starch, hydroxypropyl cellulose, regenerated cellulose, and mixtures thereof.

The binder is usually added in an amount of 1 to 50 parts by weight, preferably 3 to 15 parts by weight, based on 100 parts by weight of the total weight of the positive electrode. If the content of the binder is less than 1 part by weight, the adhesive strength between the positive electrode active material and the current collector may be insufficient. If the content of the binder exceeds 50 parts by weight, the adhesive strength is improved but the content of the positive electrode active material may be reduced accordingly, thereby lowering the capacity of the battery.

The electrically conductive material comprised in the positive electrode is not particularly limited as long as it does not cause side reactions in the internal environment of the lithium-sulfur battery and has excellent electrical conductivity while not causing chemical changes in the battery. The electrically conductive material may typically be graphite or electrically conductive carbon, and may be, for example, but is not limited to, one selected from the group consisting of graphite such as natural graphite or artificial graphite; carbon black such as carbon black, acetylene black, Ketjen black, Denka black, thermal black, channel black, furnace black, lamp black, etc.; carbon-based materials whose crystal structure is graphene or graphite; electrically conductive fibers such as carbon fibers and metal fibers; carbon fluoride; metal powders such as aluminum and nickel powder; electrically conductive whiskers such as zinc oxide and potassium titanate; electrically conductive oxides such as titanium oxide; electrically conductive polymers such as polyphenylene derivatives; and a mixture of two or more thereof.

The electrically conductive material is typically added in an amount of 0.5 to 50 parts by weight, preferably 1 to 30 parts by weight, based on 100 parts by weight of total weight of the positive electrode. If the content of electrically conductive material is too low, that is, if it is less than 0.5 parts by weight, it is difficult to obtain an effect on the improvement of the electrical conductivity, or the electrochemical characteristics of the battery may be deteriorated. If the content of the electrically conductive material exceeds 50 parts by weight, that is, if it is too much, the amount of positive electrode active material is relatively small and thus capacity and energy density may be lowered. The method of incorporating the electrically conductive material into the positive electrode is not particularly limited, and conventional methods known in the related art such as coating on the positive electrode active material can be used. Also, if necessary, the addition of the second coating layer with electrical conductivity to the positive electrode active material may replace the addition of the electrically conductive material as described above.

In addition, a filler may be selectively added to the positive electrode of the present invention as a component for inhibiting the expansion of the positive electrode. Such a filler is not particularly limited as long as it can inhibit the expansion of the electrode without causing chemical changes in the battery, and examples thereof may comprise olefinic polymers such as polyethylene and polypropylene; fibrous materials such as glass fibers and carbon fibers.

The positive electrode active material, the binder, the electrically conductive material and the like are dispersed and mixed in a dispersion medium (solvent) to form a slurry, and the slurry can be applied onto the positive electrode current collector, followed by drying and rolling it to prepare a positive electrode. The dispersion medium may be, but is not limited to, N-methyl-2-pyrrolidone (NMP), dimethyl formamide (DMF), dimethyl sulfoxide (DMSO), ethanol, isopropanol, water, or a mixture thereof.

The positive electrode current collector may be, but is not necessarily limited to, platinum (Pt), gold (Au), palladium (Pd), iridium (Ir), silver (Ag), ruthenium (Ru), nickel (Ni), stainless steel (STS), aluminum (Al), molybdenum (Mo), chromium (Cr), carbon (C), titanium (Ti), tungsten (W), ITO (In doped SnO₂), FTO (F doped SnO₂), or an alloy thereof, or aluminum (Al) or stainless steel whose surface is treated with carbon (C), nickel (Ni), titanium (Ti) or silver (Ag) or so on. The shape of the positive electrode current collector may be in the form of a foil, film, sheet, punched form, porous body, foam or the like.

### Electrolyte

The electrolyte comprised in the lithium-sulfur battery of the present invention comprises a first solvent comprising a heterocyclic compound containing one or more double bonds and at the same time, containing any one of an oxygen atom and a sulfur atom; a second solvent comprising diglyme; and lithium salt, and exhibits a synergistic effect with the positive electrode containing the sulfur-modified polyacrylonitrile-based compound described above as an active material.

The first solvent comprises a heterocyclic compound containing one or more double bonds and at the same time containing any one of an oxygen atom and a sulfur atom. Since the heterocyclic compound has the property of being difficult to dissolve salts due to the delocalization of the lone pair electrons of the hetero atom (oxygen atom or sulfur atom), a polymer protective film (solid electrolyte interface, SEI layer) is formed on the surface of a lithium-based metal (negative electrode) by a ring opening reaction of a heterocyclic compound in the initial discharging stage of the battery, and thus it is possible to suppress the formation of lithium dendrite, and furthermore, it is possible to improve the lifetime characteristics of the lithium-sulfur battery by reducing the decomposition of the electrolyte solution on the surface of lithium-based metal and subsequent side reactions.

That is, the heterocyclic compound of the present invention is essentially required to have at least one double bond, in order to form a polymeric protective film on the surface of a lithium-based metal, and must also contain a heteroatom (oxygen atom or sulfur atom) in order to exhibit effects such as increasing affinity with other solvents in the electrolyte by making it polar.

The heterocyclic compound may be a 3 to 15 membered, preferably 3 to 7 membered, more preferably 5 to 6 membered heterocyclic compounds. In addition, the heterocyclic compound may be a heterocyclic compound substituted or unsubstituted by at least one selected from the group consisting of an alkyl group having 1 to 4 carbon atoms, a cyclic alkyl group having 3 to 8 carbon atoms, an aryl group having 6 to 10 carbon atoms, a halogen group, a nitro group (-NO₂), an amine group (-NH₂), and a sulfonyl group (-SO₂). In addition, the heterocyclic compound may be a multicyclic compound of a heterocyclic compound and at least one of a cyclic alkyl group having 3 to 8 carbon atoms and an aryl group having 6 to 10 carbon atoms.

When the heterocyclic compound is substituted with an alkyl group having 1 to 4 carbon atoms, it is preferable because radicals are stabilized and side reactions between electrolyte solutions can be suppressed. In addition, when substituted with a halogen group or a nitro group, it is preferable because a functional protective film can be formed on the surface of a lithium-based metal, and at this time, the formed functional protective film is stable as a compact protective film, enables uniform deposition of the lithium-based metal, and has an advantage in that it can suppress a side reaction between polysulfide and the lithium-based metal.

Specific examples of the heterocyclic compound may comprise at least one selected from the group consisting of furan, 2-methylfuran, 3-methylfuran, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl)furan, thiophene, 2-methylthiophene, 2-ethylthiophene, 2-propylthiophene, 2-butylthiophene, 2,3-dimethylthiophene, 2,4-dimethylthiophene and 2,5-dimethylthiophene, and among them, it is preferable to use 2-methylfuran as the first solvent.

Next, the second solvent contained in the electrolyte of the present invention comprises a diglime (or diethylene glycol dimethyl ether) and is characterized in that it does not include an ether-based compound other than diglime. If one or more types selected from other ether-system compound, for example, monoglime, triglime, and tetraglime, are used as a second solvent, the capacity and lifetime of the battery are significantly reduced as compared to the case of using diglime as a second solvent, so it is impossible to achieve an object in the present invention. In addition, if diglime is used as a second solvent, the reduction stability of the negative electrode is higher than those of conventional solvents (e.g., carbonate-based solvents), which can suppress the decomposition reaction of electrolyte, and thus the lithium consumption and the increase in film resistance, thereby improving cycle lifetime performance.

In addition, even if diglyme is used as the second solvent of the present invention, unless it is contained in a specific content, it is impossible to achieve the object of the present invention. That is, the second solvent should be contained in the electrolyte in an amount of 40 to 80% by volume, preferably 45 to 55% by volume, based on 100% by volume of the total solvent (first solvent + second solvent) contained in the electrolyte of the present invention. If the second solvent is less than 40% by volume based on 100% by volume of the total solvent (first solvent + second solvent) contained in the electrolyte of the present invention, since the amount of the second solvent in which the lithium salt (Li-Salt) is dissolved is small, the viscosity is increased and the ionic conductivity is decreased, and there may be a problem (immiscible issue) of not being mixed with the first solvent (especially, 2-methylfuran). In addition, if the second solvent is contained in an amount exceeding 80% by volume based on 100% by volume of the total solvent (first solvent + second solvent) contained in the electrolyte of the present invention, since the first solvent (especially 2-methylfuran) is reduced to less than 20% by volume, and accordingly, the effect (Li-Metal protection effect) of the first solvent (especially 2-methylfuran) is reduced, the lifetime of the battery may be reduced.

Subsequently, the lithium salt (Li-Salt) contained in the electrolyte of the present invention is an electrolyte salt used to increase ion conductivity, and may be used without particular limitation as long as it is commonly used in the art. Such lithium salt may be exemplified by at least one selected from the group consisting of LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (CF₃SO₂)₂NLi, (C₂F₅SO₂)₂NLi, (SO₂F)₂NLi, (CF₃SO₂)₃CLi, lithium chloroborane, lithium lower aliphatic carboxylate having 4 or less carbon atoms, lithium 4-phenyl borate and lithium imide, and among them, it is preferable to use LiFSI ((SO₂F)₂NLi) as an essential component. In addition, in one embodiment of the present invention, the electrolyte may be in a form that does not contain LiTFSI ((CF₃SO₂)₂NLi).

The concentration of the lithium salt may be determined in consideration of ion conductivity and the like, and may be, for example, 0.5 to 2 M, preferably 0.7 to 1.5 M, more preferably 0.8 to 1.2 M. If the concentration of the lithium salt is less than 0.5 M, it is difficult to ensure ion conductivity suitable for operating the battery. If the concentration of the lithium salt exceeds 2 M, the viscosity of the electrolyte solution is increased, so that the mobility of lithium ions is deteriorated, or the decomposition reaction of the lithium salt itself is increased, thereby deteriorating the performance of the battery.

Meanwhile, the electrolyte contained in the lithium secondary battery according to the present invention may further contain nitric acid-based compounds (N-O bond type compounds), if necessary (However, it is limited to the case of using sulfur-carbon composite in addition to S-PAN as a positive electrode active material). The nitric acid-based compound may be exemplified by at least one selected from the group consisting of lithium nitrate (LiNO₃), potassium nitrate (KNO₃), cesium nitrate (CsNO₃), magnesium nitrate (MgNO₃), barium nitrate (BaNO₃), lithium nitrite (LiNO₂), potassium nitrite (KNO₂), cesium nitrite (CsNO₂).

### Negative electrode

The negative electrode comprised in the lithium-sulfur battery of the present invention is a lithium-based metal, and may further include a negative electrode current collector on one side of the lithium-based metal. The negative electrode current collector is not particularly limited as long as it has high electrical conductivity without causing chemical changes in the battery, and may be selected from the group consisting of copper, aluminum, stainless steel, zinc, titanium, silver, palladium, nickel, iron, chromium, and alloys and combinations thereof. The stainless steel can be surface-treated with carbon, nickel, titanium, or silver, and the alloy may be an aluminum-cadmium alloy. In addition, sintered carbon, a non-conductive polymer surface-treated with an electrically conductive material or a conductive polymer may be used. In general, a thin copper foil is used as the negative electrode current collector.

In addition, the shape of the negative electrode current collector can be various forms such as a film having or not having fine irregularities on its surface, sheet, foil, net, porous body, foam, nonwoven fabric and the like. In addition, the negative electrode current collector is in the thickness range of 3 to 500 µm. If the thickness of the negative electrode current collector is less than 3 µm, the current collecting effect is lowered. On the other hand, if the thickness exceeds 500 µm, when folding and then assembling the cell, there is a problem that the workability is reduced.

The lithium-based metal may be lithium or a lithium alloy. In that case, the lithium alloy contains an element capable of alloying with lithium, and specifically the lithium alloy may be an alloy of lithium and at least one selected from the group consisting of Si, Sn, C, Pt, Ir, Ni, Cu, Ti, Na, K, Rb, Cs, Fr, Be, Mg, Ca, Sr, Sb, Pb, In, Zn, Ba, Ra, Ge and Al. lithium alloy may be an alloy of lithium and at least one selected from the group consisting of Si, Sn, C, Pt, Ir, Ni, Cu, Ti, Na, K, Rb, Cs, Fr, Be, Mg, Ca, Sr, Sb, Pb, In, Zn, Ba, Ra, Ge and Al. The lithium-based metal may be in the form of a sheet or foil, and in some cases, may be in a form in which lithium or a lithium alloy is deposited or coated on a current collector by a dry process, or may be in a form in which metal and an alloy in a particle phase are deposited or coated by a wet process or the like.

### Separator

A conventional separator may be interposed between the positive electrode and the negative electrode. The separator is a physical separator having a function of physically separating the electrodes, and can be used without particular limitation as long as it is used as a conventional separator, and particularly, a separator with low resistance to ion migration in the electrolyte solution and excellent impregnating ability for the electrolyte solution is preferable.

In addition, the separator enables the transport of lithium ions between the positive electrode and the negative electrode while separating or insulating the positive electrode and the negative electrode from each other. The separator may be made of a porous, nonconductive, or insulating material. The separator may be an independent member such as a film or a coating layer added to the positive electrode and/or the negative electrode.

Examples of the polyolefin-based porous film which can be used as the separator may be films formed of any polymer alone selected from polyethylenes such as high-density polyethylene, linear low-density polyethylene, low-density polyethylene, and ultra-high molecular weight polyethylene, and polyolefin-based polymers such as polypropylene, polybutylene, and polypentene, or formed of a polymer mixture thereof.

Examples of the nonwoven fabric that can be used as the separator is a nonwoven fabric formed by a polymer of polyphenyleneoxide, polyimide, polyamide, polycarbonate, polyethyleneterephthalate, polyethylenenaphthalate, polybutyleneterephthalate, polyphenylenesulfide, polyacetal, polyethersulfone, polyetheretherketone, polyester and the like alone or a mixture thereof. Such nonwoven fabrics include a nonwoven fabric in the form of a fiber to form a porous web, that is, a spun-bond or a melt-blown nonwoven fabric composed of long fibers.

The thickness of the separator is not particularly limited, but is preferably in the range of 1 to 100 µm, more preferably 5 to 50 µm. If the thickness of the separator is less than 1 µm, the mechanical properties cannot be maintained. If the thickness of the separator exceeds 100 µm, the separator acts as a resistive layer, thereby deteriorating the performance of the battery. The pore size and porosity of the separator are not particularly limited, but it is preferable that the pore size is 0.1 to 50 µm and the porosity is 10 to 95%. If the separator has a pore size of less than 0.1 µm or a porosity of less than 10%, the separator acts as a resistive layer. If the separator has a pore size exceeding 50 µm or a porosity of more than 95%, mechanical properties cannot be maintained.

The lithium-sulfur battery of the present invention comprising the positive electrode, the negative electrode, the separator and the electrolyte as described above can be manufactured through a process of facing the positive electrode with the negative electrode, interposing the separator between them, and then injecting the electrolyte according to the present invention.

On the other hand, the lithium-sulfur battery according to the present invention is applied to a battery cell used as a power source for a small device, and also can be particularly suitably used as a unit cell for a battery module, which is a power source for medium and large-sized devices. In this aspect, the present invention also provides a battery module comprising two or more lithium-sulfur batteries electrically connected (series or parallel). Of course, the quantity of lithium-sulfur batteries comprised in the battery module may be variously adjusted in consideration of the use and capacity of the battery module. Furthermore, the present invention provides a battery pack in which the battery modules are electrically connected according to a conventional technique in the art. The battery module and the battery pack may be used as a power source for any one or more medium and large-sized devices among a power tool; electric vehicles including electric vehicle (EV), a hybrid electric vehicle (HEV), and a plug-in hybrid electric vehicle (PHEV); electric truck; electric commercial vehicles; or power storage systems, but are not limited thereto.

Hereinafter, preferred examples of the present invention will be described in order to facilitate understanding of the present invention. It will be apparent to those skilled in the art, however, that the following examples are only illustrative of the present invention and various changes and modifications can be made within the scope and spirit of the present invention, and that such variations and modifications are within the scope of the appended claims.

### [Example 1] Manufacturing of lithium-sulfur battery

### Preparation of electrolyte

First, in an organic solvent obtained by mixing 2-methylfuran (first solvent) and diglyme (second solvent) at a volume ratio (v/v) of 20:80, LiFSI was dissolved so that its concentration was 1.0M, to prepare an electrolyte for a lithium-sulfur battery.

### Manufacture of positive electrode

80 parts by weight of a sulfur-modified polyacrylonitrile-based compound of Formula 1 below (sulfur content in polymer: 40% by weight) as a positive active material, 10 parts by weight of carbon black as a conductive material and 10 parts by weight of styrene-butadiene rubber/carboxymethyl cellulose (SBR/CMC 7:3 weight ratio) as a binder were mixed to prepare a slurry composition for a positive electrode, and then the prepared slurry composition was coated at 8 mg/cm² on a current collector (Al Foil with a thickness of 20 µm), dried at 50 °C for 12 hours, and compressed with a roll press device to manufacture a positive electrode.

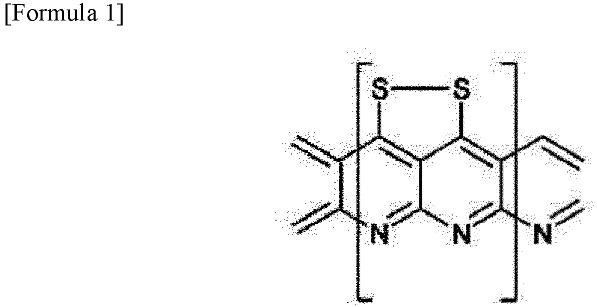

On the other hand, the sulfur-modified polyacrylonitrile-based compound was prepared by mixing a PAN polymer (manufacturer: Sigma-Aldrich, MW: 160,000) and sulfur powder (manufacturer: Sigma-Aldrich, 99.98% trace metals basis) in a weight ratio of 1:4, and then heat-treating it, and the heat treatment was performed in an Ar atmosphere and was performed under conditions of increasing the temperature from room temperature (25°C) to 450°C at a rate of 10°C/min.

### Manufacture of lithium-sulfur battery

The prepared positive electrode and the lithium metal negative electrode having a thickness of 35 *µ*m were positioned to face each other, and a polyethylene (PE) separator was interposed therebetween, and then 70 *µ*ℓ of the prepared electrolyte was injected to manufacture a coin cell type lithium-sulfur battery. Meanwhile, in the manufacture of the battery, the positive electrode was punched with a 14 phi circular electrode, the polyethylene separator was punched with 19 phi, and the lithium metal was punched with 16 phi.

### [Examples 2~5, Comparative Examples 1~7] Manufacture of lithium-sulfur battery

Lithium-sulfur batteries of Examples 2 to 5 and Comparative Examples 1 to 7 were manufactured in the same manner as in Example 1 above, except that composition of the electrolyte is changed as shown in Table 1 below.

**Table 1:**

| | First solvent | Second solvent | Third solvent | Lithium salt |
|---|---|---|---|---|
| Example 1 | 2-methylfuran (20 % by volume) | diglyme (80 % by volume) | | LiFSI 1.0M |
| Example 2 | 2-methylfuran (30 % by volume) | diglyme (70 % by volume) | | LiFSI 1.0M |
| Example 3 | 2-methylfuran (40 % by volume) | diglyme (60 % by volume) | | LiFSI 1.0M |
| Example 4 | 2-methylfuran (50 % by volume) | diglyme (50 % by volume) | | LiFSI 1.0M |
| Example 5 | 2-methylfuran (60 % by volume) | diglyme (40 % by volume) | | LiFSI 1.0M |
| Comparative Example 1 | 2-methylfuran (30 % by volume) | dimethoxyethane (70 % by volume) | | LiFSI 1.0M |
| Comparative Example 2 | 2-methylfuran (30 % by volume) | triglyme (70 % by volume) | | LiFSI 1.0M |
| Comparative Example 3 | 2-methylfuran (30 % by volume) | tetraglyme (70 % by volume) | | LiFSI 1.0M |
| Comparative Example 4 | 2-methylfuran (15 % by volume) | diglyme (85 % by volume) | | LiFSI 1.0M |
| Comparative Example 5 | 1,3-dioxolane (30 % by volume) | diglyme (70 % by volume) | | LiFSI 1.0M |
| Comparative Example 6 | 1,3-dioxolane (30 % by volume) | dimethoxyethane (60 % by volume) | sulfolane (10 % by volume) | LiFSI 1.0M |
| Comparative Example 7 | 1,3-dioxolane (30 % by volume) | diglyme (60 % by volume) | sulfolane (10 % by volume) | LiFSI 1.0M |

### [Experimental Example 1] Evaluation of lifetime characteristics and capacity of lithium-sulfur battery

The lithium-sulfur batteries prepared in Examples 1 to 5 and Comparative Examples 1 to 7 were charged and discharged at 0.1C for 1 cycle (voltage range: 0.5 to 3.2V), charged and discharged at 0.2C for 3 cycles (voltage range: 1 to 3V), and then charged at 0.3C and discharged at 0.5C (voltage range: 1 to 3V) to evaluate the lifetime characteristics and capacity of the batteries. At this time, the evaluation temperature was 25 °C.

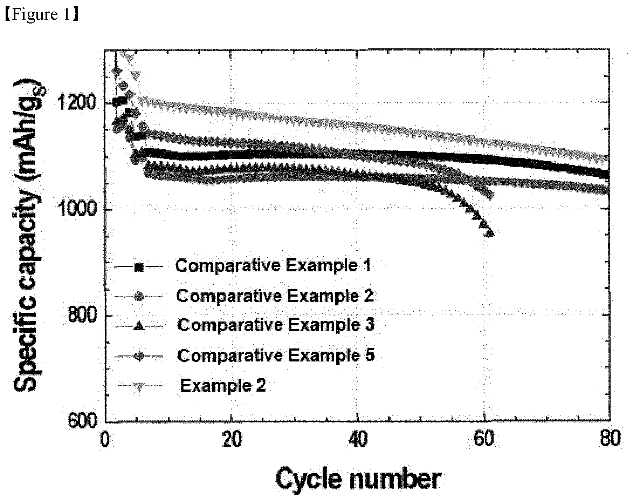

FIG. 1 is a graph comparing and contrasting the lifetime characteristics and capacity of the lithium-sulfur batteries manufactured according to an Example of the present invention and Comparative Example. Referring to FIG. 1, it was confirmed that Example 2 containing 2-methylfuran and diglyme in the electrolyte has superiority in both lifetime characteristics and capacity, as compared to Comparative Examples 1 to 3 using dimethoxyethane (monoglyme), triglyme or tetraglyme instead of diglyme or Comparative Example 5 using 1,3-dioxolane instead of 2-methylfuran (Comparative Example 5 was deteriorated rapidly, especially after 50 cycles). Through this, it was found that the lithium-sulfur battery in which the sulfur-modified polyacrylonitrile-based compound is applied to the positive electrode must contain diglyme as an electrolyte to improve performance, and in addition, it was also found that even if diglyme is contained in the electrolyte, there is a limit to the improvement of the performance of the battery unless it is used together with 'a heterocyclic compound containing at least one double bond and at the same time containing either an oxygen atom or a sulfur atom'.

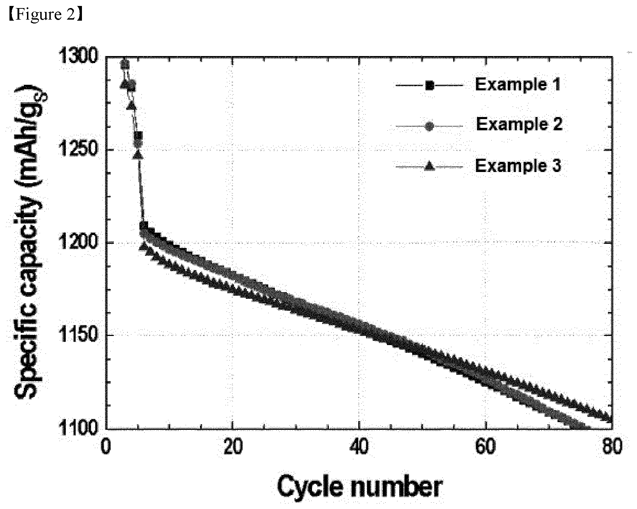

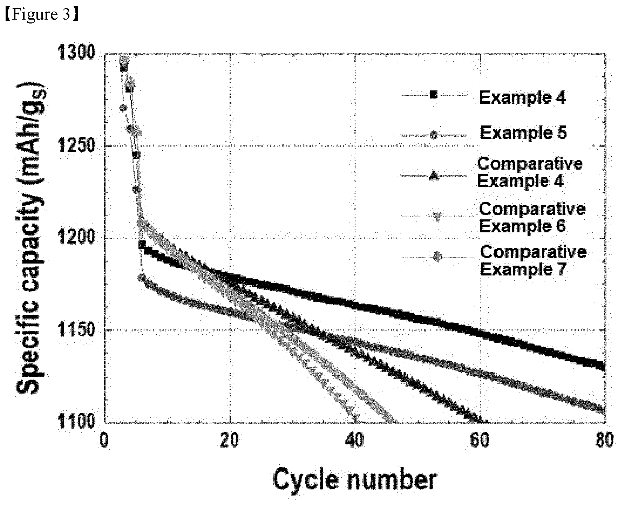

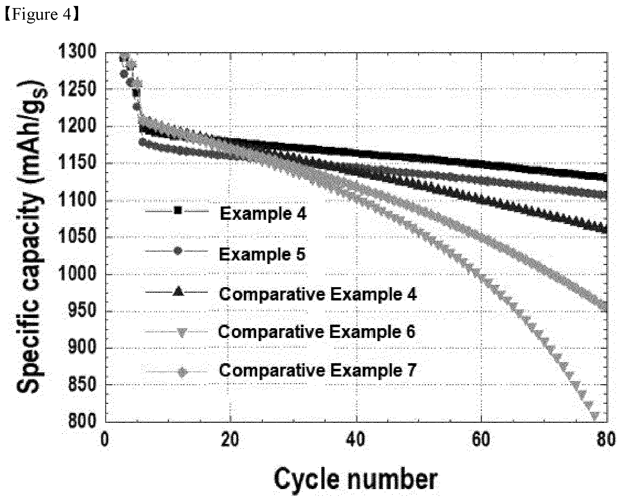

FIG. 2 is a graph comparing and contrasting lifetime characteristics and capacity of the lithium-sulfur batteries manufactured according to an Example of the present invention, and FIGs. 3 and 4 are graphs comparing and contrasting the lifetime characteristics and capacity of the lithium-sulfur batteries manufactured according to an Example of the present invention and the Comparative Example. Referring to FIGs. 2 to 4, it was confirmed that Comparative Example 4, in which the volume ratio of 2-methylfuran and diglyme contained in electrolyte, is outside the scope of the present invention (2:8~6:4 (v/v)) had a slightly higher initial capacity compared to some Examples, but as the cycle progressed, it was inferior to Examples 1 to 5 in both lifetime characteristics and capacity. Through this, it was confirmed that in the case of the lithium-sulfur battery in which sulfur-modified polyacrylonitrile-based compound is applied to the positive electrode, even if the electrolyte contains 2-methylfuran and diglyme equally, if the volume ratio does not satisfy the scope of the present invention, performance improvement is impossible. In addition, the applicant of the present invention tried to evaluate the lifetime characteristics and capacity of the battery when the volume ratio of 2-methylfuran and diglyme contained in the electrolyte was set to 6.5:3.5, but the evaluation itself was impossible because lithium salt (LiFSI) was not completely dissolved.

On the other hand, Comparative Example 6 uses 1,3-dioxolane, dimethoxyethane and sulfolane as solvents for electrolyte, and Comparative Example 7 uses 1,3-dioxolane, diglyme and sulfolane as solvents for electrolyte. However, it was confirmed that Comparative Examples 6 and 7 were inferior in both lifetime characteristics and capacity compared to Examples 4 and 5 as the cycle was repeated. In particular, Comparative Examples 6 and 7 showed a large extent of decrease in capacity compared to the other Comparative Examples. The reason is that gas is generated during the charging/discharging process when sulfolane is used as a solvent for electrolyte. Sulfolane is a solvent that can dissolve a lot of lithium salt, but combines with lithium salt to generate gas in the form of a free-solvent that does not form a complex. In other words, if sulfolane, which is a free-solvent, binds to the surface of lithium metal, which is a negative electrode of a lithium-sulfur battery, and interferes with the formation of the SEI layer, the side reaction between lithium metal and electrolyte or lithium polysulfide is accelerated, which leads to deterioration of the performance of the battery. Therefore, the lithium-sulfur battery of the present invention is also characterized in that the electrolyte does not contain a sulfolane-based solvent.

## Claims

1. A lithium-sulfur battery comprising a positive electrode containing at least one sulfur-modified polyacrylonitrile-based compound as an active material; a lithium metal negative electrode; and an electrolyte containing a first solvent containing a heterocyclic compound containing one or more double bonds, and at the same time containing any one of an oxygen atom and a sulfur atom, a second solvent containing diglyme and lithium salt.

2. The lithium-sulfur battery according to claim 1, wherein the second solvent is contained in an amount of 40 to 80% by volume relative to 100% by volume of the total solvent contained in the electrolyte.

3. The lithium-sulfur battery according to claim 1, wherein the second solvent does not contain at least one selected from monoglyme, triglyme and tetraglyme.

4. The lithium-sulfur battery according to claim 1, wherein the heterocyclic compound is at least one selected from the group consisting of furan, 2-methylfuran, 3-methylfuran, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl)furan, thiophene, 2-methylthiophene, 2-ethylthiophene, 2-propylthiophene, 2-butylthiophene, 2,3-dimethylthiophene, 2,4-dimethylthiophene and 2,5-dimethylthiophene.

5. The lithium-sulfur battery according to claim 1, wherein the heterocyclic compound is 2-methylfuran.

6. The lithium-sulfur battery according to claim 1, wherein the lithium salt is at least one selected from the group consisting of LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, LiTFSI((CF₃SO₂)₂NLi), (C₂F₅SO₂)₂NLi, LiFSI((SO₂F)₂Nli), (CF₃SO₂)₃CLi, lithium chloroborane, lithium lower aliphatic carboxylate having 4 or less carbon atoms, lithium 4-phenyl borate and lithium imide.

7. The lithium-sulfur battery according to claim 1, wherein the lithium salt contains LiFSI.

8. The lithium-sulfur battery according to claim 1, wherein the concentration of the lithium salt is 0.5 to 2 M.

9. The lithium-sulfur battery according to claim 1, wherein the electrolyte further comprises at least one selected from the group consisting of lithium nitrate, potassium nitrate, cesium nitrate, magnesium nitrate, barium nitrate, lithium nitrite, potassium nitrite and cesium nitrite.

10. The lithium-sulfur battery according to claim 1, wherein the sulfur-modified polyacrylonitrile-based compound is at least one selected from the group consisting of compounds represented by Formulas 1 to 5 below: 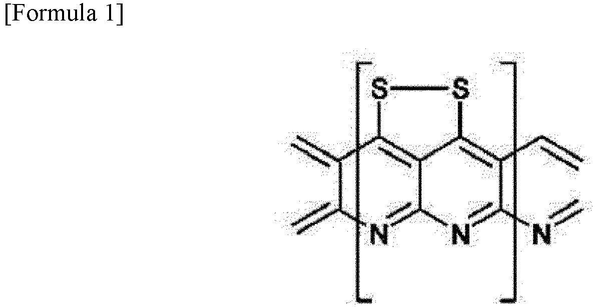 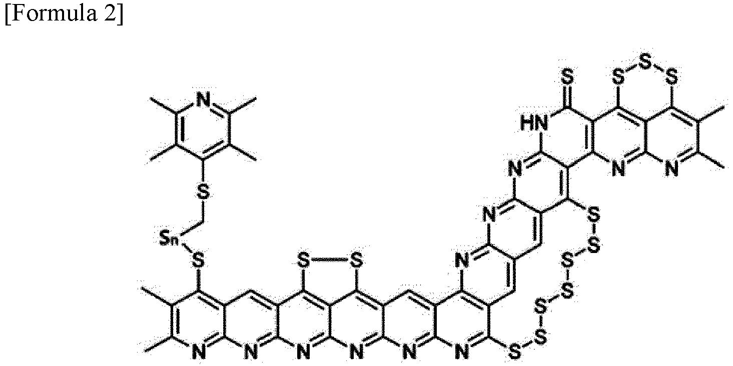 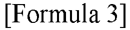 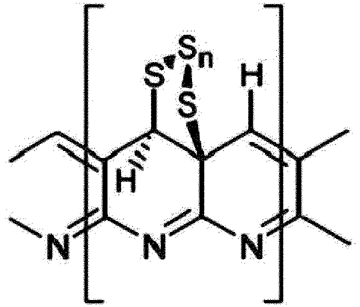 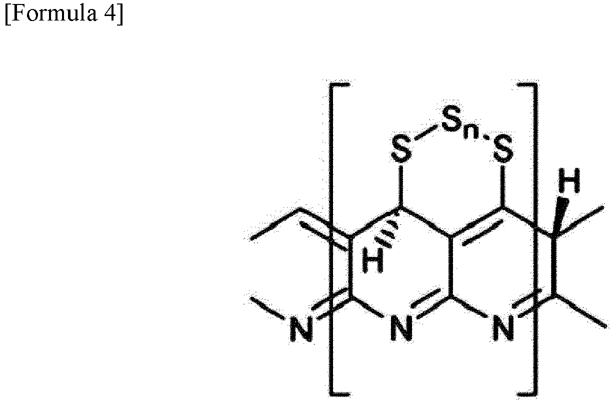 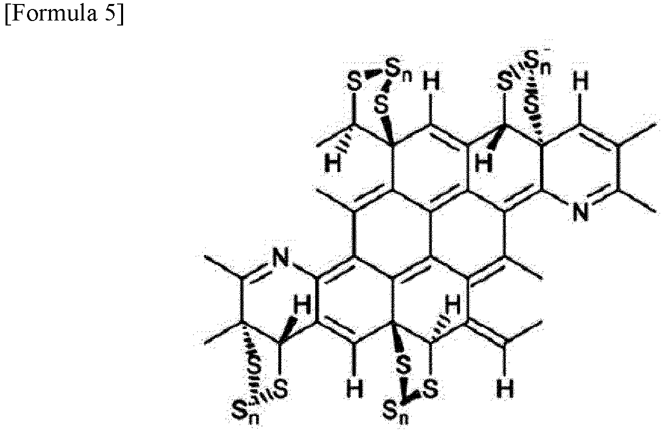 wherein n is an integer of 1 to 4.

11. The lithium-sulfur battery according to claim 1, wherein the positive electrode active material further comprises a porous metal oxide additive represented by Formula 6 below:
[Formula 6] M_{1.8}Co_{1.2}O₄
wherein M is at least one selected from the group consisting of Zn, Co, Cu, Fe, Ni and Mn.

12. The lithium-sulfur battery according to claim 1, wherein the positive electrode active material further comprises a sulfur-carbon composite.

13. The lithium-sulfur battery according to claim 1, wherein the sulfur-modified polyacrylonitrile-based compound comprises 15 to 45% by weight of sulfur.
